(19) Europäisches Patentamt
European Patent Office
Office européen des brevets

(11) **EP 2 924 232 A2**

(12) # DEMANDE DE BREVET EUROPEEN

(43) Date de publication:
**30.09.2015 Bulletin 2015/40**

(51) Int Cl.:
***E21B 43/00*** *(2006.01)*     ***E21B 49/00*** *(2006.01)*

(21) Numéro de dépôt: **15305280.8**

(22) Date de dépôt: **24.02.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **25.03.2014 FR 1452480**

(71) Demandeur: **IFP Energies nouvelles**
**92852 Rueil-Malmaison Cedex (FR)**

(72) Inventeurs:
- **Mesri, Youssef**
  **Rueil Malmaison 92500 (FR)**
- **Ricois, Olivier**
  **78420 Carrieres sur Seine (FR)**

(54) **PROCÉDÉ DE CONSTRUCTION D'UN MAILLAGE OPTIMISE POUR LA SIMULATION DE RESERVOIR DANS UNE FORMATION SOUTERRAINE**

(57)     - A un instant T de la simulation de réservoir, on estime une fonction de taille caractérisant le maillage initial représentatif de la formation souterraine étudiée. Puis on simule, au moyen d'un simulateur de réservoir et du maillage initial, l'écoulement des fluides au sein de la formation à cet instant T. On calcule ensuite une fonction de taille optimisée au moyen de la fonction de taille estimée sur le maillage initial et d'au moins un paramètre déduit de la simulation de réservoir. Et enfin, on construit un maillage optimisé en modifiant le maillage initial en fonction de la fonction de taille optimisée.
- Application notamment à l'exploration et à exploitation de gisements pétroliers.

EP 2 924 232 A2

**Description**

La présente invention concerne le domaine de l'exploration pétrolière, plus particulièrement le domaine de l'exploration et de l'exploitation des réservoirs pétroliers ou de sites de stockage géologique de gaz.

L'étude d'un champ pétrolier nécessite la construction d'une représentation de la formation souterraine étudiée, appelée aussi modèle géologique au sens large ou encore géomodèle. Ces modèles, bien connus et largement utilisés dans l'industrie pétrolière, permettent de déterminer de nombreux paramètres techniques relatifs à la recherche, l'étude ou l'exploitation d'un réservoir, d'hydrocarbures par exemple. Ainsi, un modèle géologique se doit d'être représentatif de la structure d'un réservoir ainsi que de son comportement. Ce type de maquette du sous-sol est le plus souvent représenté sur un ordinateur, par un maillage ou grille, généralement tridimensionnel, chaque maille étant caractérisée par une ou plusieurs propriétés pétrophysiques (faciès, porosité, perméabilité, saturation, etc).

Ce maillage peut être utilisé pour réaliser des simulations numériques telles que la modélisation de bassin, la simulation de réservoir et/ou la simulation d'injection de $CO_2$, simulations visant à améliorer la compréhension d'un champ pétrolier ou d'un site de stockage géologique de gaz.

La simulation de réservoir étudie l'évolution au cours du temps des proportions d'eau, de gaz et de pétrole dans un réservoir, afin de juger de sa rentabilité, ou encore de valider ou d'optimiser la position des puits en vue de son exploitation. La simulation de réservoir est basée sur la simulation d'écoulement dans un milieu poreux. Un simulateur d'écoulement quant à lui est un logiciel permettant, entre autre, de modéliser la production d'un gisement en fonction du temps. Ces simulations sont réalisées en résolvant un système d'équations aux dérivées partielles représentatives des écoulements, en utilisant par exemple des méthodes de volumes finis appliquées à une représentation maillée du milieu souterrain concerné. De façon générale, lors d'une expérience de simulation de réservoir, l'ingénieur réservoir définit une durée sur laquelle il souhaite simuler les écoulements dans la formation d'intérêt. Puis ces équations sont résolues par un schéma numérique, pas de temps après pas de temps, la taille du pas de temps (pouvant être une fonction ou une constante) étant intrinsèquement liée au schéma numérique choisi, et ce afin de garantir la stabilité de ce schéma numérique. Le résultat d'une simulation de réservoir est en particulier une succession d'instantanés (comme des images prises à différents instants) représentatifs de l'état d'écoulement des fluides dans la formation étudiée. De part la lourdeur des calculs impliqués, la simulation de réservoir est une technique considérée à l'heure actuelle comme très consommatrice en temps de calcul et en mémoire.

État de la technique

Les documents suivants seront cités au cours de la description :

K.H. Coats, L.K. Thomas, R.G. Pierson, " Compositional and black oil reservoir simulation", SPE Reservoir Evaluation and Engineering, 1998.
R. Garimella and M. Shephard, Boundary layer meshing for viscous flows in complex domains, 7th International Meshing Roundtable, pp. 107-118, 1998.
H. Borouchaki and P.-J. Frey, Adaptive triangular-quadrilateral mesh generation, Int. j. numer. methods eng., Vol. 41, pp. 915-934, 1998.
D. Li and B. Beckner, Optimal Uplayering for scaleup of multi-million cell geologic models. SPE paper 62927, 2000.
A. Tam and D. Ait-Ali-Yahia and M. Robichaud and M. Moore and V. Kozel and W. Habashi, Anisotropic mesh adaptation for 3D flows on structured and unstructured grids, Computer Methods in Applied Mechanics and Engineering, pp. 1205-1230, 2001.
R. Verfurth, A review of a posteriori error estimation and adaptive mesh-refinement techniques, Wiley-Teubner, 1996.

En raison des limites des supercalculateurs actuels (en terme de puissance et de capacité mémoire), les calculs de simulation de réservoir ne peuvent être réalisés sur une grille comprenant un très grand nombre de mailles (la limite actuelle est de l'ordre d'un million de mailles). En amont de la simulation de réservoir, les ingénieurs réservoir réalisent alors une étape dite d' « upscaling » (par exemple Li and Beckner, 2000), ou encore de « mise à l'échelle » en français. Cette étape consiste à construire une grille grossière dont les valeurs dans les mailles correspondent à une moyenne des propriétés pétro-physiques du modèle géologique défini quant à lui à une échelle fine. Un tel passage d'une grille fine (de l'ordre de plusieurs dizaines de mètres) à une grille grossière (de l'ordre de plusieurs centaines de mètres) introduit un lissage des propriétés pétro-physiques du modèle géologique. En conséquence, la contribution des hétérogénéités fines décrites dans le modèle géologique n'est pas restituée par la simulation de réservoir, et la solution obtenue est une approximation de la réalité des écoulements.

Toujours en raison des limitations liées aux moyens de calculs actuels, dans le cas de champs pétroliers géants comme il en existe au Moyen-Orient ou encore en Russie, au Mexique ou au Venezuela, les ingénieurs réservoir divisent le modèle géologique en plusieurs sous-modèles, représentant chacun une partie de la formation souterraine. Or cette façon de procéder oblige à introduire des conditions aux limites relatives au débit de fluides d'un sous-modèle à un autre, ce qui peut conduire à une solution de la simulation d'écoulement erronée.

Un autre compromis, classiquement mis en oeuvre afin de réduire les temps de calcul, consiste à réaliser des simulations semi-compositionnelles, c'est-à-dire des simulations pour lesquelles la composition et les propriétés thermodynamiques du fluide, modélisées par une équation d'état, sont approximées par un modèle « Black-Oil » (« huile noire » en français), restreint aux trois pseudo-composantes que sont l'huile, l'eau et le gaz. Cette approximation ne permet pas de correctement appréhender les changements de composition dans le réservoir, qui induisent toutefois des phénomènes qui nécessiteraient un suivi complet de chaque composant du fluide.

Ainsi, la simulation de réservoir est aujourd'hui fortement limitée dans ces capacités en raison du nombre de mailles maximal qui peut être pris en compte par les moyens de calcul actuels.

En parallèle des techniques de l'ingénierie de réservoir, des méthodes de grossissement, ou déraffinement, dynamique et local du maillage ont été développées dans le domaine de la mécanique des fluides. Plus précisément, ces techniques visent à adapter les maillages, au fur à mesure des calculs de simulation, et de façon ciblée dans l'espace. La taille du problème à résoudre est alors considérablement réduite sans pour autant sacrifier à la précision, et ce, de façon transparente pour l'utilisateur final. La difficulté majeure de ces algorithmes réside dans la génération du maillage déraffiné, en particulier dans le cas de maillages non structurés (cas des maillages basés sur des éléments volumiques de type tétraèdre, prisme, hexaèdre, etc.) et dans le cas d'une propriété physique à représenter de nature anisotrope (propriété physique dont les valeurs varient en fonction de la direction). Il s'agit alors de générer une séquence de maillages grossiers à partir d'un maillage fin. Les maillages grossiers à générer doivent respecter la géométrie 3D initiale, conserver graduellement la structure hétérogène initiale, ainsi que la localisation des points (un point du maillage grossier doit exister dans le maillage fin) pour faciliter la construction des opérateurs de prolongement et de restriction.

Cette problématique fait partie de la famille des problèmes d'adaptation dynamique de maillages déstructurés. Dans la littérature, il y a deux catégories principales de méthodes de contrôle et d'adaptation de maillages :

- méthodes sans métriques : on peut citer par exemple la méthode de raffinement mono-directionnel afin d'obtenir des étirements dans les directions opposées ou encore l'extrusion à partir d'un maillage surfacique (par exemple Garimella and Shephard, 1998). Ces méthodes manquent de souplesse et sont confrontées à des problèmes de connections dans le cas de géométries complexes (zones courbées, surfaces).
- méthodes avec métriques : il a été démontré (Borouchaki et Frey, 1998 ; Tam et al., 2001) qu'une représentation de maillage par métriques de Riemann facilite la génération de maillages adaptés et anisotropes. La métrique associée à l'espace de Riemann spécifie la taille de maillage et les directions de l'étirement. Par conséquent, un maillage adapté et anisotrope dans l'espace euclidien peut être représenté comme un maillage isotrope et unitaire dans l'espace de Riemann. Cette représentation d'un maillage par métrique de Riemann est un outil répandu pour la génération et l'adaptation de maillages anisotropes. Elle a été employée dans des applications diverses en 2D et 3D : simulations des EDP (Equations aux Dérivées Partielles), traitement d'image, représentation graphique, etc. Cette méthode est robuste pour traiter des maillages simpliciaux (mailles de type triangulaires en 2D et tétraédriques en 3D) mais ne s'applique pas directement sur des maillages hexaédriques, généralement impliqués pour la simulation de réservoir, à cause de la rigidité de la structure de ces derniers.

La présente invention propose un procédé pour construire un maillage optimisé pour la simulation de réservoir, en adaptant dynamiquement, localement, et de façon automatique, le maillage représentatif d'une formation souterraine utilisé pour ladite simulation de réservoir. Ce procédé s'appuie sur l'extension de la notion de métrique qu'est la fonction de taille, et peut s'appliquer aussi bien aux maillages simpliciaux qu'aux maillages hexaédriques.

## Le procédé selon l'invention

Ainsi, la présente invention concerne un procédé de construction d'un maillage optimisé pour une simulation de réservoir au cours du temps d'au moins un fluide au sein d'une formation souterraine, au moyen d'un modèle de réservoir comprenant un maillage, une valeur d'au moins une propriété pétro-physique étant affectée à chaque maille dudit maillage. Le procédé comporte au moins les étapes suivantes à un instant T :

a) on estime une fonction de taille caractérisant ledit maillage audit instant T ;
b) on simule, au moyen d'un simulateur de réservoir et dudit maillage, l'écoulement dudit fluide au sein de ladite formation audit instant T ;
c) on calcule une fonction de taille optimisée au moyen de ladite fonction de taille et d'au moins un paramètre déduit de ladite simulation ;
d) on construit ledit maillage optimisé en modifiant ledit maillage en fonction de ladite fonction de taille optimisée.

Selon un mode préféré de mise en oeuvre de l'invention, ledit simulateur de réservoir peut être basé sur un modèle thermique compositionnel complet.

Selon un mode préféré de mise en oeuvre de l'invention, ledit paramètre peut être un indicateur d'erreur sur le résultat de ladite simulation.

Selon un mode préféré de mise en oeuvre de l'invention, ledit indicateur d'erreur peut correspondre à une estimation de l'erreur a posteriori de ladite simulation.

Préférentiellement, ledit maillage optimisé peut être modifié en fonction de ladite fonction de taille optimisée à l'aide d'une technique locale d'optimisation de maillage.

Avantageusement, ladite technique locale d'optimisation peut satisfaire au moins les conditions suivantes :

- la préservation de la conformité dudit maillage ;
- l'amélioration de la qualité dudit maillage.

Selon un mode préféré de mise en oeuvre de l'invention, on peut ajouter, après l'étape d), une étape e) pouvant consister en une mise à l'échelle du résultat de ladite simulation audit instant T et desdites valeurs de ladite propriété pétro-physique sur ledit maillage optimisé.

Selon un autre mode préféré de mise en oeuvre de l'invention, ladite mise à l'échelle peut être réalisée de la façon suivante :

- on peut localiser les noeuds dudit maillage optimisé dans ledit maillage ; et

- on peut interpoler ledit résultat dudit simulateur audit instant T et lesdites valeurs de ladite propriété pétro-physique sur ledit maillage optimisé.

Avantageusement, on peut réitérer les étapes a) à e) jusqu'à pouvoir satisfaire une précision prédéfinie sur ledit résultat de ladite simulation de réservoir audit instant T.

On peut définir un procédé de simulation de réservoir dudit fluide au sein de ladite formation pour une succession d'instants T, mettant en oeuvre le procédé de construction d'un maillage optimisé pour une simulation de réservoir selon l'invention, dans lequel on peut réitérer les étapes a) à e) pour une succession d'instants T consécutifs de ladite simulation, ladite simulation à un instant T+1 pouvant être réalisée sur ledit maillage optimisé à l'instant T.

De manière préférée, la succession d'instants T peut correspondre à une succession de pas de temps de ladite simulation.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon la description ci-dessus, lorsque ledit programme est exécuté sur un ordinateur.

On peut définir un procédé d'exploitation d'une formation souterraine en réalisant les étapes suivantes :

- on peut réaliser une simulation réservoir au moyen du procédé de simulation de réservoir dudit fluide au sein de ladite formation décrit ci-dessus ;

- on peut déterminer un schéma d'exploitation optimal du réservoir à partir du résultat de ladite simulation de réservoir ;

- on peut exploiter ledit réservoir en mettant en oeuvre ledit schéma d'exploitation optimal.

**Présentation succincte des Figures**

D'autres caractéristiques et avantages du procédé selon l'invention, apparaîtront à la lecture de la description ci-après d'exemples non limitatifs de réalisations, en se référant aux figures annexées et décrites ci-après.

La Figure 1 présente différentes opérations d'adaptation réalisables sur une cavité 2D, telles que la suppression d'un noeud (flèche A), le déplacement d'un noeud (flèche B), ou encore l'ajout d'un noeud (flèche C).

Les Figures 2A et 2B présentent un exemple de maillage tétraédrique respectivement avant et après déraffinement anisotrope dans la direction verticale.

Les Figures 3A et 3B présentent un exemple de maillage 2D hexaédrique respectivement avant et après déraffinement isotrope non-conforme. Les Figures 3C et 3D présentent la version 3D du même maillage héxaédrique, après déraffinement, et avec superposition des variations de saturation en vapeur sur la Figure 3D.

**Description détaillée du procédé**

Les définitions suivantes sont utilisées au cours de la description de l'invention :

- *modèle thermique compositionnel complet :* il s'agit d'un modèle permettant de résoudre et de suivre le flux des espèces d'hydrocarbures individuelles dans les phases huile et gaz, en prenant en compte les effets causés par les gaz à grande vitesse tels que les flux non Darcéens aux abords de puits.
- *métrique :* il s'agit d'une fonction mathématique qui définit la distance entre les éléments d'un ensemble. Un ensemble muni d'une distance est appelé un espace métrique.
- *fonction de taille :* il s'agit d'une fonction discrète sur un ensemble fini, associant à chaque élément de cet ensemble une grandeur mesurable $h$, qui est la taille de cet élément.
- *raffinement/déraffinement d'un maillage :* il s'agit de l'action de réduire/grossir la taille des mailles d'un maillage.
- *maillage conforme:* il s'agit d'un maillage pour lequel l'intersection de deux éléments quelconques est soit vide ou soit une face du maillage (sommet, arête, face triangulaire ou quadrilatérale).
- *cavité associée à un noeud:* il s'agit de l'ensemble des mailles dont au moins une arête est incidente au noeud considéré.

L'objet de la présente invention est un procédé pour construire un maillage optimisé, de façon automatique et à un instant T, pour la simulation des écoulements au sein d'une formation souterraine, mettant en oeuvre une stratégie d'adaptation locale et automatique du maillage. Un instant T peut être un temps prédéfini de la simulation. La mise en oeuvre de l'invention nécessite de disposer d'un modèle de réservoir de la formation souterraine étudiée, le modèle de réservoir étant représenté sous la forme d'un maillage, une valeur d'au moins une propriété pétro-physique étant affectée à chaque maille de ce maillage. Ce maillage peut être caractérisé par une représentation en couches, les couches géologiques pouvant être de géométries quelconques et intersectées par une ou plusieurs failles. Le maillage peut être structuré ou non structuré, et la géométrie des mailles du maillage peut être quelconque. L'invention requiert un simulateur des écoulements des fluides dans une formation souterraine, dit aussi simulateur de réservoir. La présente invention est basée sur l'estimation d'une fonction de taille, puis une stratégie d'adaptation de cette fonction de taille est mise en oeuvre afin d'imposer des tailles de mailles optimales, localement et dans les différentes directions de l'espace.

Ainsi, pour un instant T donné et pour un maillage donné, que l'on appellera maillage courant dans la suite, la présente invention comporte au moins les étapes suivantes :

a) estimation d'une fonction de taille ;
b) simulation de réservoir à un instant T ;
c) estimation d'une fonction de taille optimisée ;
d) construction d'un maillage optimisé.

Selon un mode de mise en oeuvre de l'invention, on ajoute, après l'étape d), une étape e) consistant en une mise à l'échelle du résultat du simulateur de réservoir à l'instant T et des propriétés pétro-physiques sur le maillage optimisé.

Selon un autre mode de réalisation de la présente invention, on réitère les étapes a) à e) pour une succession d'instants T, ladite simulation à un instant T+1 étant réalisée sur le maillage optimisé à l'instant T.

Selon un mode préféré de mise en oeuvre de l'invention, on réalise une simulation de réservoir selon le mode de réalisation précédent.

Selon un mode préférentiel de réalisation de l'invention, la série d'instants T correspond à la série de pas de temps de la simulation de réservoir.

Les principales étapes de la présente invention sont détaillées ci-après.

**Estimation d'une fonction de taille**

Au cours de cette étape, il s'agit de définir une fonction de taille caractérisant le maillage courant, utilisé pour représenter le modèle réservoir de la formation souterraine étudiée à l'instant T. En particulier, il s'agit de caractériser la taille et l'étirement de chacune des mailles du maillage courant.

Selon un mode de mise en oeuvre de l'invention, la fonction de taille $h$ d'une maille M est définie dans un repère local décrit par les directions principales associées à cette maille. Dans le cas d'une maille M tridimensionnelle, la fonction de taille $h$ s'écrit de la façon suivante :

$$h(M) = h_1 \vec{e_1} + h_2 \vec{e_2} + h_3 \vec{e_3}$$ , où $\vec{e_i}$ correspond au vecteur unitaire dans la direction principale i de la maille M et $h_i$ correspond à la longueur de l'arête de la maille M dans la direction principale i (avec i=1 à 3).

**Simulation de réservoir à un instant T**

Au cours de cette étape, on calcule une solution de la simulation de l'écoulement, à un instant T, à partir du maillage courant et d'un simulateur d'écoulement. Par exemple, le logiciel PumaFlow® (IFP Energies nouvelles, France) est un simulateur d'écoulement en milieu poreux dont la succession de calculs est exécutée sur un ordinateur.

Le degré de réalisme de la solution de la simulation de réservoir est en partie fonction du modèle d'écoulement sur lequel repose le simulateur d'écoulement. Le choix d'un modèle par rapport à un autre dépend des caractéristiques du réservoir, de la nature des fluides présents dans le réservoir, et du procédé d'exploitation utilisé. Les modèles considérés dans la littérature sont généralement le modèle monophasique, le modèle Black-Oil, le modèle compositionnel, le modèle chimique, le modèle thermique ou encore le modèle fissuré.

Selon un mode préféré de réalisation de la présente invention, le simulateur d'écoulement utilise un modèle thermique compositionnel complet (voir par exemple Coats et al., 1998). Un système non-linéaire d'équations aux dérivées partielles non linéaires et fortement couplées est alors résolu. Ce système représente le changement transitoire des compositions fluides (c'est-à-dire la saturation) et la pression dans chaque maille. La saturation dans chaque maille peut changer en raison des mouvements de fluides liés à un gradient de potentiel, un gradient de composition, à des effets de bords (puits injecteurs et/ou producteurs), ou encore à des effets de variations de pression dues à la compressibilité de la roche. Une équation de conservation non linéaire est résolue pour chaque composant d'hydrocarbure. La distribution de chacun de ces composants dans le gaz ou dans les phases liquides est régie par un équilibre thermodynamique, qui est résolu en tant que système couplé avec les équations d'écoulement. La convergence est obtenue par un algorithme itératif de Newton-Raphson, en utilisant une matrice Jacobienne dérivée des équations non linéaires discrétisées. Chaque itération de Newton-Raphson invoque un solveur linéaire itératif qui doit être capable de gérer un nombre quelconque d'inconnues par maille.

**Estimation d'une fonction de taille optimisée**

Au cours de cette étape, il s'agit de déterminer une fonction de taille optimisée à partir de la fonction de taille caractérisant le maillage courant estimée lors de l'étape d' « Estimation d'une fonction de taille » et d'au moins un paramètre caractéristique du résultat de la simulation de réservoir calculé à l'étape de « Simulation de réservoir à un instant T ». Plus précisément, l'objectif de cette étape est de déterminer une nouvelle taille et une nouvelle géométrie des mailles du maillage courant, cette détermination étant pilotée par au moins un paramètre déduit du résultat de la simulation de réservoir.

Selon un mode de réalisation de la présente invention, au moins un des paramètres caractéristiques du résultat de la simulation de réservoir est la direction préférentielle des écoulements de fluide dans la formation souterraine étudiée.

Selon un autre mode de réalisation de la présente invention, au moins un des paramètres caractéristiques du résultat de la simulation de réservoir est un indicateur d'erreur sur le résultat de la simulation de réservoir. Ainsi, pour ce mode de réalisation, au moins un des paramètres utilisés est une quantification de la qualité du résultat de la simulation de réservoir réalisée sur le maillage courant.

Selon un mode de réalisation de la présente invention, l'indicateur d'erreur correspond à un estimateur d'erreur.

Selon un mode préféré de réalisation de l'invention, on construit un indicateur d'erreur à partir d'une estimation de l'erreur a posteriori réalisée lors du calcul de la simulation de réservoir à l'instant T. L'estimation de l'erreur a posteriori est un domaine d'étude important (voir par exemple Verfurth, 1996), visant à estimer la propagation des erreurs associées à un processus, à partir d'une estimation des erreurs sur les données d'entrée de ce processus et de l'erreur engendrée par le processus lui-même.

Dans le cas où les équations régissant l'écoulement des fluides sont discrétisées par la méthode des éléments finis, selon un mode de réalisation de l'invention, on utilise un estimateur d'erreur à base résiduelle (Verfurth, 1996). Un exemple d'un tel estimateur d'erreur est donné par l'équation suivante :

$$E(M) = \left\| q \right\|_{L^2(V(M))} \cdot \left| V(M) \right|^{1/2} + \left\| u \right\|_{L^2(\partial V(M))} \cdot \left| \partial V(M) \right|^{1/2} \quad (1)$$

où le premier terme correspond au débit volumétrique dans la maille M, le deuxième terme mesure le flux à travers les bords de la maille M, q est un débit d'injection dans le cas d'un puits d'injection ou un débit de production dans le cas d'un débit de production, $u$ est la solution discrète des équations d'écoulement des fluides, V(M) est le volume de la maille, $\mathcal{V}$ (M) est l'aire du bord de la maille i, $L^2(V(M))$ est la norme $L^2$ sur le volume de la maille M, $L^2(\mathcal{V}(M))$ est la norme $L^2$ sur la surface de la maille M.

Contrairement à la méthode des éléments finis, la méthode des volumes finis garantit la conservation locale. Dans ce cas, on peut considérer que le terme source de l'équation (1) est contenu dans le terme de flux. Dans le cas où les équations régissant l'écoulement des fluides sont discrétisées par la méthode des volumes finis, selon un mode de réalisation de l'invention, un estimateur d'erreur est donné par l'expression réduite :

$$E(M) = \left\| q \right\|_{L^2(V(M))} \cdot \left| V(M) \right|^{1/2} \tag{2}$$

Selon un mode de réalisation de l'invention dans lequel le paramètre caractéristique du résultat de la simulation utilisé correspond à une estimation a posteriori de l'erreur, l'utilisateur définit au préalable un seuil d'erreur acceptable sur le résultat de la simulation de réservoir. Puis la valeur de l'erreur estimée sur le résultat de la simulation de réservoir pour chaque noeud du maillage courant est comparée à ce seuil d'erreur prédéfini. Les noeuds avec une estimation de l'erreur inférieure à celle définie par l'utilisateur sont identifiés pour subir une étape de déraffinement. En effet, ces noeuds sont alors considérés comme faisant partie de zones de la formation souterraine étudiée inactives ou peu actives pour la simulation de réservoir. Par ailleurs, les noeuds associés à une estimation d'erreur supérieure au seuil prédéfini sont identifiés pour subir une étape de raffinement. De cette façon, le processus d'adaptation du maillage permet d'equi-répartir l'erreur calculée. De plus, l'adaptation de maillage ainsi définie permet de détecter automatiquement le comportement des écoulement de fluides dans la formation souterraine et de prendre en compte l'anisotropie des phénomènes physiques.

Selon un mode de réalisation de l'invention, on détermine les mailles candidates à un déraffinement ou bien à un raffinement en calculant un indice d'adaptabilité de chaque maille du maillage courant. Selon un mode de réalisation de la présente invention, un indice d'adaptabilité pour une maille M faisant partie d'un ensemble de mailles $\mathcal{M}$ est donné par l'équation suivante :

$$I(M) = \frac{E(M)}{\max_{\mathcal{M}} E(M)} \tag{3}$$

où $E(M)$ est un estimateur d'erreur pour la maille M, calculé par exemple à l'aide des équations (1) ou (2) définies précédemment. Selon un mode de réalisation de la présente invention, on examine les valeurs de cet indice d'adaptabilité pour chaque maille M de la façon suivante :

- si $I(M) \geq \delta_1$, la maille M est candidate au déraffinement ;
- si $I(M) \leq \delta_2$ la maille M est candidate au raffinement,

où $\delta_1$ et $\delta_2$ sont des seuils de tolérance compris entre 0 et 1 avec $\delta_1 > \delta_2$.

Selon un mode de réalisation de la présente invention dans lequel au moins un paramètre caractéristique du résultat de la simulation de réservoir est un indicateur d'erreur, la conversion de cet indicateur en une fonction de taille optimisée $h'$ se fait d'une manière explicite en spécifiant un coefficient $Copt$ que l'on applique à la fonction de taille $h$ établie sur le maillage courant de la façon suivante :

$$h'(M) = Copt.h(M) \tag{4}$$

avec

- $Copt = Cr$ si la maille M est candidate au raffinement, $Cr$ étant un coefficient de raffinement ;
- $Copt = Cd$ si la maille M est candidate au déraffinement, $Cd$ étant un coefficient de déraffinement.

Selon un mode de réalisation de l'invention, on utilise des valeurs prédéfinies pour les coefficients *Cr* et/ou *Cd*.

Selon un mode de réalisation de l'invention, les valeurs des coefficients *Cr* et/ou *Cd* varient selon la direction considérée, ou autrement dit, les coefficients *Cr* et/ou *Cd* sont anisotropes.

Selon un mode de réalisation de la présente invention, la construction de la fonction de taille de optimisée prend en plus en compte des contraintes externes telles que l'emplacement des puits, les gradients de contrainte, la variation des propriétés de la matière, les points d'application de la charge, ou encore l'emplacement des conditions limites.

Construction d'un maillage optimisé

Au cours de cette étape, on construit un nouveau maillage, dit maillage optimisé, basé sur la fonction de taille optimisée estimée lors de l'étape d' « Estimation d'une fonction de taille optimisée ».

Selon un mode de réalisation de l'invention, l'optimisation du maillage est réalisée au moyen du maillage courant, de la fonction de taille optimisée, et d'un générateur de maillage.

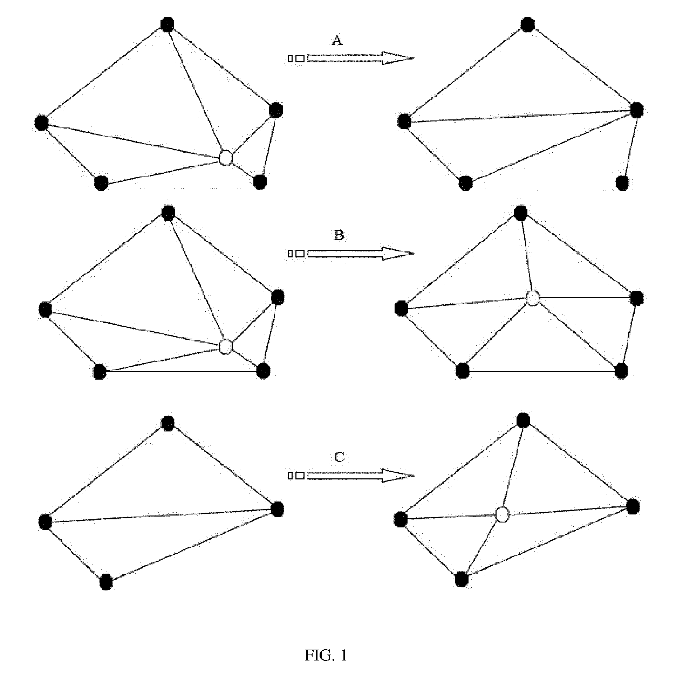

Selon un mode de réalisation de la présente invention, le générateur de maillage remaille le maillage courant par une technique locale d'optimisation de maillage. La technique d'optimisation consiste à re-mailler localement des cavités, constituées de petits regroupement de mailles, afin d'augmenter la qualité des mailles de ce regroupement. La Figure 1 présente différentes opérations d'adaptation réalisables sur une cavité 2D, telles que la suppression d'un noeud (flèche A), le déplacement d'un noeud (flèche B), ou encore l'ajout d'un noeud (flèche C).

Selon un mode de réalisation de la présente invention, le processus de re-maillage satisfait au moins les conditions suivantes :

- la conformité du maillage est préservée : si le maillage courant est conforme, aucun recouvrement de mailles n'est acceptable pour le maillage optimisé. Par conséquent, on choisit parmi toutes les solutions de maillages possibles, celle (pas nécessairement unique) qui minimise le volume de la cavité ;
- la qualité géométrique du maillage est améliorée : si la solution du critère précédent n'est pas unique, ce second critère sélectionne parmi toutes les solutions admissibles celle qui améliore la qualité du maillage.

Selon un mode de mise en oeuvre de l'invention, la qualité d'un maillage est améliorée si, pour chaque noeud N de ce maillage, la qualité de la cavité associée à ce noeud N est améliorée.

Selon un mode de réalisation de la présente invention, la qualité Q(C) d'une cavité C associée à un noeud N correspond à la valeur moyenne des qualités des mailles incidentes à ce noeud.

Selon un mode de réalisation de la présente invention, la qualité d'une maille M est estimée selon la formule suivante :

$$Q(M) = c_0 \frac{V(M)}{L(M)^d} \qquad (5)$$

où V(M) est le volume de la maille M, L(M) est la moyenne des longueurs d'arêtes de M, d est la dimension de l'espace (d=1 en 1 D, d=2 en 2D, d=3 en 3D) et $c_0$ est telle que l'expression ci-dessus soit égale à 1 quand la maille M est un polyèdre régulier (par exemple un cube).

Selon un mode de réalisation de la présente invention, la qualité d'une maille M est calculée dans le repère local de la maille, celui-ci étant composé des axes principaux de la fonction de taille associée à la maille M.

Selon un mode de mise en oeuvre de l'invention, l'amélioration de la qualité d'un maillage se fait en appliquant l'algorithme suivant pour chaque noeud N de ce maillage :

i. on calcule la fonction de qualité Q(C) de la cavité C associée au noeud N ;

ii. on supprime les arêtes incidentes au noeud N ;

iii. on connecte le noeud N à des arêtes du bord de la cavité C de façon à construire une nouvelle cavité C' autour de N ;

iv. on évalue la qualité Q'(C') de la nouvelle cavité C' ;

v. si Q'(C') > Q(C) alors la cavité C' est conservée, sinon on retourne à l'étape iii pour définir une nouvelle cavité.

**Mise à l'échelle sur le maillage optimisé**

Cette étape, que l'on notera e) par la suite, est facultative et peut être ajoutée après avoir déterminé un maillage optimisé selon l'étape de « Construction d'un maillage optimisé » décrite ci-dessus. Cette étape consiste à mettre à l'échelle du maillage optimisé les quantités physiques connues et /ou simulées sur le maillage courant.

Selon un mode de réalisation dans lequel le maillage optimisé déterminé à un instant T est utilisé pour poursuivre les calculs d'écoulement dans la formation souterraine à un instant T+1, on a recours à une telle étape pour interpoler sur le maillage optimisé :

- le résultat de la simulation de réservoir calculée à un instant T sur le maillage courant ;
- les valeurs des propriétés pétro-physiques connues sur le maillage courant.

Selon un mode de réalisation de la présente invention dans lequel on réalise une boucle d'optimisation sur le maillage à un instant T donné, on a recours à une telle étape pour interpoler sur le maillage optimisé :

- le résultat de la simulation de réservoir calculée à l'instant T sur le maillage courant ;
- les valeurs des propriétés pétro-physiques connues sur le maillage courant.

Selon un mode de réalisation de la présente invention, on réalise une première étape dans laquelle on recherche la localisation de chacun des noeuds du maillage optimisé, en identifiant les cellules du maillage courant les contenant, puis on réalise une seconde étape consistant en l'interpolation des quantités physiques connues sur le maillage courant. Ces deux étapes sont détaillées ci-après :

i. Localisation des noeuds

Le problème de la localisation d'un noeud du maillage optimisé consiste à identifier la maille du maillage courant qui contient ce noeud. Ce problème doit être traité avec attention de façon à pouvoir traiter des configurations difficiles. En effet, les maillages (courant et optimisé) peuvent être non convexes et contenir des trous. Il est même possible que le recouvrement du maillage optimisé ne soit pas identique à celui du maillage courant, car leurs maillages de frontières sont différents. Ceci implique que des noeuds du maillage optimisé peuvent être en dehors du maillage courant et réciproquement.

Afin de débuter le processus de localisation, chaque maille du maillage courant est associée à une maille du maillage optimisé. Puis pour un noeud du maillage optimisé, on démarre un processus de localisation dans le maillage courant associé. Dans le cas où l'on bute sur une frontière (à cause d'un trou ou d'un domaine non convexe), on analyse les mailles voisines de la maille courante.

Selon un mode de mise en oeuvre de la présente invention, on a recours au processus de localisation décrit dans (Borouchaki et Frey,1998). Ce processus consiste, pour un noeud donné du maillage optimisé, à se déplacer par voisinage dans le maillage (orienté) courant afin de trouver la maille du maillage courant contenant le noeud considéré, et ce en utilisant un algorithme basé sur les coordonnées barycentriques.

ii. Méthode d'interpolation

Une fois que chaque noeud du maillage optimisé a été localisé dans le maillage courant, on procède à l'interpolation des quantités connues sur le maillage courant afin de les estimer sur le maillage optimisé. Ces quantités peuvent être par exemple le résultat de la simulation de réservoir calculée à l'instant T sur le maillage courant et/ou les propriétés pétro-physiques connues sur le maillage courant.

Selon un mode de réalisation de l'invention, on utilise un schéma d'interpolation classique de type polynôme de degré 1.

Selon un mode préférentiel de réalisation de l'invention dans lequel les maillages considérés sont de type tétraédrique, si l'on note N un noeud du maillage optimisé, M = [N1,N2,N3,N4] la maille tétraédrique du maillage courant contenant ce noeud N, $M_i$ la maille tétraédrique virtuelle dans laquelle on a remplacé le sommet $N_i$ par le sommet N (avec i=1,4), alors l'interpolation d'une fonction $u$ est donnée par :

$$u(N) = \sum_i \omega_i(N) u(N_i) \text{ avec } \omega_i(N) = V_{M_i}/V_M \qquad (5)$$

avec $V_M$ le volume de la maille M, et $V_{M_i}$ le volume de la maille $M_i$.

Selon un mode de réalisation de la présente invention dans lequel les maillages considérés sont quelconques, on subdivise chaque polyèdre en tétraèdres et on applique le mode de réalisation défini ci-dessus pour les maillages tétraédriques.

**Optimisation du maillage à un instant T**

Selon un mode de réalisation de l'invention, on adapte de façon optimale le maillage à un instant T donné en réitérant au moins les étapes suivantes

a) estimation d'une fonction de taille ;
b) simulation de réservoir à un instant T;
c) estimation d'une fonction de taille optimisée ;
d) construction du maillage optimisé ;
e) mise à l'échelle sur le maillage optimisé.

jusqu'à satisfaire une précision prédéfinie du résultat de la simulation de réservoir à l'instant T.

Selon un mode de réalisation de la présente invention, la précision prédéfinie correspond à l'erreur associée au résultat de la simulation de réservoir estimée à la première itération du processus itératif ainsi décrit. De cette façon, on recherche le maillage optimisé dont l'erreur associée est au plus égale à celle réalisée sur le maillage considéré en entrée du processus itératif ainsi décrit.

**Simulation de réservoir avec adaptation dynamique du maillage**

Selon un mode de réalisation de la présente invention, on réitère les étapes a) à e) définies précédemment pour une succession d'instants T consécutifs, la simulation de l'étape b) à un instant T+1 étant réalisée sur le maillage optimisé à l'instant T. Ainsi, on réalise une simulation de réservoir sur un maillage optimisé à chaque instant T, ce qui permet notamment de diminuer le temps de calcul.

Selon un mode préféré de réalisation de l'invention, les instants T consécutifs sont espacés par le pas de temps choisi pour résoudre le schéma numérique de la simulation réservoir. Ainsi, la simulation est optimisée pour chaque pas de temps de la simulation de réservoir.

Selon un mode préférentiel de réalisation de la présente invention, le maillage courant à la première itération correspond au modèle géologique représentatif de la formation souterraine étudiée.

**Exploitation du réservoir**

En outre, l'invention concerne un procédé d'exploitation d'une formation souterraine, dans lequel on réalise les étapes suivantes :

- on réalise une simulation de réservoir au moyen du procédé de simulation de réservoir tel que décrit précédemment ;

- on détermine un schéma d'exploitation optimal du réservoir à partir du résultat de la simulation de réservoir ;

- on exploite ledit réservoir en mettant en oeuvre ledit schéma d'exploitation optimal.

A partir d'une simulation de réservoir selon l'invention, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés, etc. Pour chacun de ces schémas, il convient de déterminer leurs prévisions de production. Ces prévisions de production probabilistes peuvent être obtenues au moyen de la simulation de réservoir selon l'invention.

A partir des prévisions de productions probabilistes définies pour chaque schéma d'exploitation, les spécialistes peuvent par comparaison choisir le schéma d'exploitation qui leur semble le plus pertinent. Par exemple :

- en comparant le maximum du volume d'huile récupéré, on peut déterminer le schéma de production susceptible de fournir le maximum de récupération ou d'être le plus rentable ;

- en comparant l'écart type du volume d'huile récupéré, on peut déterminer le schéma de production le moins risqué.

On exploite alors le réservoir selon le schéma d'exploitation défini par exemple en forant de nouveaux puits (producteur ou injecteur), en modifiant les outils utilisés, en modifiant les débits et/ou la nature de fluides injectés, etc.

L'invention concerne, par ailleurs, un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque le programme est exécuté sur un ordinateur.

## Exemples d'application

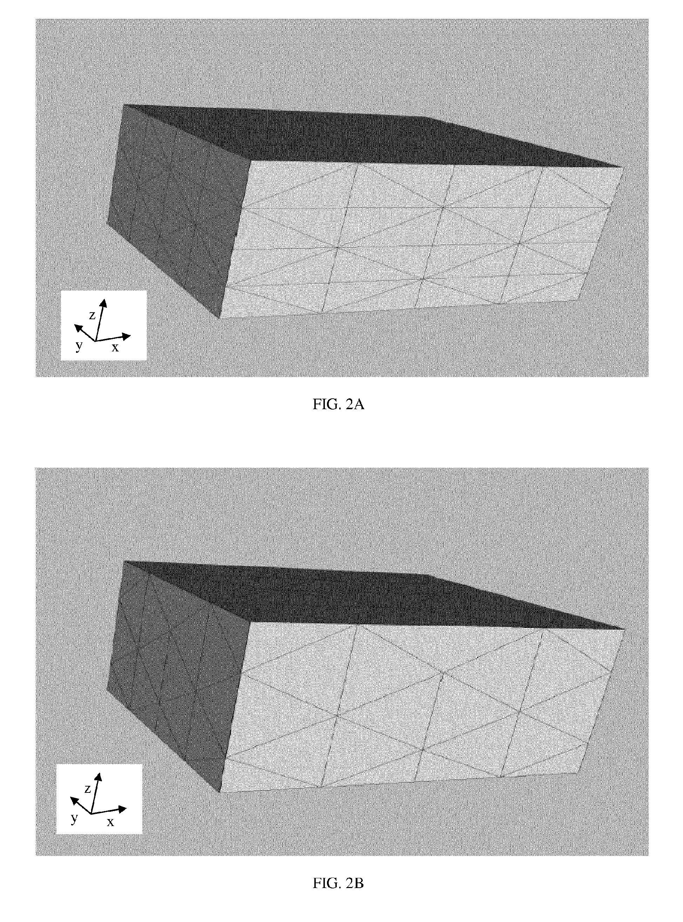

Le procédé d'optimisation de maillage selon l'invention est illustré en Figure 2 dans le cas d'un maillage tridimensionnel de type tétraédrique. Le maillage courant, présenté en Figure 2A, est composé de 27 noeuds et de trois couches dans la direction verticale (définie selon l'axe z). Une simulation de réservoir a été réalisée et a démontré que les écoulements de fluides se font très majoritairement dans un plan horizontal (défini selon les 2 axes x et y). Une précision importante des propriétés pétro-physiques n'étant pas nécessaire dans la direction verticale, il est décidé d'opérer un déraffinement dans la direction verticale. Plus précisément, l'objectif est de déterminer, sur la base du maillage courant présenté en Figure 2A, un maillage optimisé dont, premièrement, la longueur d'arêtes dans la direction z est deux fois plus grande que celle du maillage courant, et deuxièmement, la longueur d'arêtes reste inchangée dans les directions x et y. A l'issue du procédé d'optimisation selon l'invention, on obtient un maillage optimisé isotrope constitué de 18 noeuds et de deux couches (Figure 2B). De plus, la taille des arêtes des mailles du maillage optimisé selon l'invention a bien doublé dans la direction verticale par rapport à celle du maillage courant.

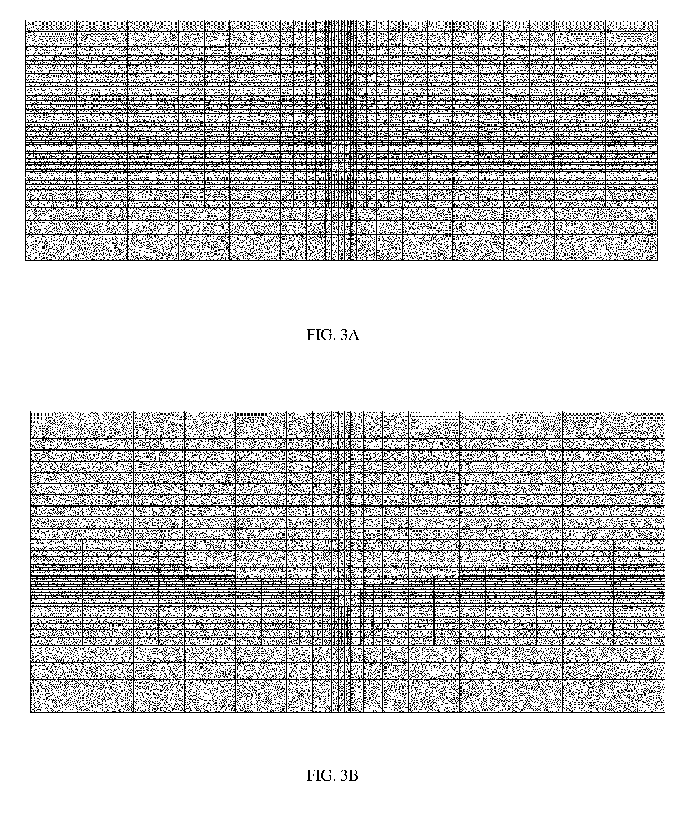

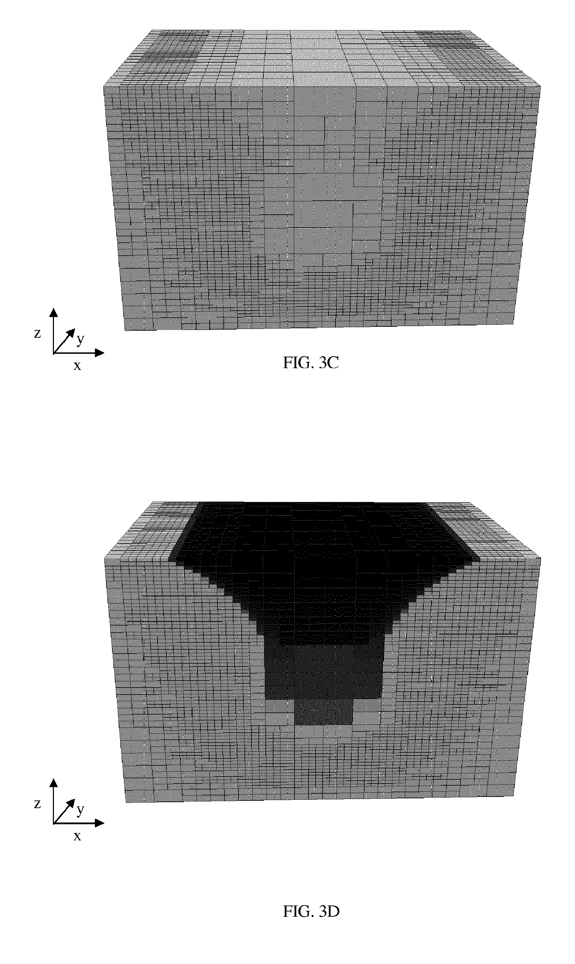

Les Figures 3A à 3D illustrent un cas d'application du procédé d'optimisation de maillage selon l'invention dans le cadre d'une simulation du procédé thermique SAGD (Steam Assisted Gravity Drainage). SAGD est un procédé de drainage par gravité d'un réservoir d'huiles lourdes, utilisant une injection de vapeur dans le réservoir afin de réduire la viscosité des huiles en place. Une section verticale dans le maillage courant 3D d'un tel réservoir est présentée en Figure 3A. Le procédé d'optimisation de maillage selon l'invention a été mis en oeuvre en utilisant un estimateur d'erreur a posteriori pour établir la fonction de taille. De plus, un indicateur d'adaptabilité tel que défini par l'équation (3) et un calcul de la fonction de taille optimisée tel que défini par l'équation (4) ont été utilisés pour réaliser l'étape d' « Estimation d'une fonction de taille optimisée ». En particulier, les valeurs suivantes ont été utilisées :

- pour les seuils de tolérance associés à l'équation (3) : $\delta_1$ =0.7 et $\delta_2$ =0.4 ;

- pour les coefficients de raffinement/déraffinement associés à l'équation (4) : $C_r$=0.5 et $C_d$ = 2.

Le maillage résultant du processus d'optimisation de maillage selon l'invention, pour la même section verticale et pour le même instant T qu'en Figure 3A, est présenté en Figure 3B. On peut en particulier observer sur cette Figure que la méthode selon l'invention permet une adaptation locale de la taille des mailles du maillage courant. Les Figures 3C à 3D permettent de montrer que l'adaptation locale du maillage est pilotée par le résultat de la simulation de réservoir. La Figure 3C présente le maillage tridimensionnel résultant de la mise en oeuvre du procédé selon l'invention pour un instant T donné. Les variations du taux de saturation de la vapeur, obtenues par simulation de réservoir à ce même instant T, sont superposées au maillage tridimensionnel optimisé présenté en Figure 3C, la couleur noire correspondant à un taux de saturation de vapeur maximal. Les zones du maillage optimisé selon l'invention présentant des valeurs de saturation de vapeur les plus élevées (mailles en gris foncé à noir) correspondent donc aux zones situées après le passage du front de vapeur. On peut ainsi constater que le procédé selon l'invention permet d'obtenir des mailles très grossières dans les zones déjà traversées par le passage du front, contrairement aux zones situées en avant et au niveau du front de vapeur, pour lesquelles le maillage est plus fin. Ainsi, la présente invention permet d'assurer la finesse du maillage, et a fortiori celle des propriétés pétro-physiques d'intérêt, dans les régions dans lesquelles les écoulements sont prépondérants à un instant T, et de déraffiner ailleurs.

## Revendications

1. Procédé de construction d'un maillage optimisé pour une simulation de réservoir au cours du temps d'au moins un fluide au sein d'une formation souterraine, au moyen d'un modèle de réservoir comprenant un maillage, une valeur d'au moins une propriété pétro-physique étant affectée à chaque maille dudit maillage, **caractérisé en ce que** l'on réalise au moins les étapes suivantes à un instant T :

   a) on estime une fonction de taille caractérisant ledit maillage audit instant T ;
   b) on simule, au moyen d'un simulateur de réservoir et dudit maillage, l'écoulement dudit fluide au sein de ladite formation audit instant T ;

c) on calcule une fonction de taille optimisée au moyen de ladite fonction de taille et d'au moins un paramètre déduit de ladite simulation ;

d) on construit ledit maillage optimisé en modifiant ledit maillage en fonction de ladite fonction de taille optimisée.

2. Procédé selon la revendication 1, dans lequel ledit simulateur de réservoir est basé sur un modèle thermique compositionnel complet.

3. Procédé selon l'une des revendications précédentes, dans lequel ledit paramètre est un indicateur d'erreur sur le résultat de ladite simulation.

4. Procédé selon l'une des revendications précédentes, dans lequel ledit indicateur d'erreur correspond à une estimation de l'erreur a posteriori de ladite simulation.

5. Procédé selon l'une des revendications précédentes, dans lequel ledit maillage optimisé est modifié en fonction de ladite fonction de taille optimisée à l'aide d'une technique locale d'optimisation de maillage.

6. Procédé selon la revendication 5, dans lequel ladite technique locale d'optimisation satisfait au moins les conditions suivantes :

- la préservation de la conformité dudit maillage ;
- l'amélioration de la qualité dudit maillage.

7. Procédé selon l'une des revendications précédentes, dans lequel on ajoute, après l'étape d), une étape e) consistant en une mise à l'échelle du résultat de ladite simulation audit instant T et desdites valeurs de ladite propriété pétro-physique sur ledit maillage optimisé.

8. Procédé selon la revendication 7, dans lequel ladite mise à l'échelle est réalisée de la façon suivante :

- on localise les noeuds dudit maillage optimisé dans ledit maillage ; et
- on interpole ledit résultat dudit simulateur audit instant T et lesdites valeurs de ladite propriété pétro-physique sur ledit maillage optimisé.

9. Procédé selon l'une des revendications 7 à 8, dans lequel on réitère les étapes a) à e) jusqu'à satisfaire une précision prédéfinie sur ledit résultat de ladite simulation de réservoir audit instant T.

10. Procédé de simulation de réservoir dudit fluide au sein de ladite formation pour une succession d'instants T, mettant en oeuvre le procédé selon l'une des revendications 7 à 9, dans lequel on réitère les étapes a) à e) pour une succession d'instants T consécutifs de ladite simulation, ladite simulation à un instant T+1 étant réalisée sur ledit maillage optimisé à l'instant T.

11. Procédé selon la revendication 10, dans lequel la succession d'instants T correspond à une succession de pas de temps de ladite simulation.

12. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

13. Procédé d'exploitation d'une formation souterraine, **caractérisé en ce qu'**on réalise les étapes suivantes :

- on réalise une simulation réservoir au moyen du procédé décrit selon l'une des revendications 10 à 11 ;
- on détermine un schéma d'exploitation optimal du réservoir à partir du résultat de ladite simulation de réservoir ;
- on exploite ledit réservoir en mettant en oeuvre ledit schéma d'exploitation optimal.

FIG. 1

FIG. 2A

FIG. 2B

FIG. 3A

FIG. 3B

FIG. 3C

FIG. 3D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K.H. COATS ; L.K. THOMAS ; R.G. PIERSON.** Compositional and black oil reservoir simulation. *SPE Reservoir Evaluation and Engineering,* 1998
- **R. GARIMELLA ; M. SHEPHARD.** Boundary layer meshing for viscous flows in complex domains. *7th International Meshing Roundtable,* 1998, 107-118
- **H. BOROUCHAKI ; P.-J. FREY.** Adaptive triangular-quadrilateral mesh generation. *Int. j. numer. methods eng.,* 1998, vol. 41, 915-934

- **D. LI ; B. BECKNER.** Optimal Uplayering for scaleup of multi-million cell geologic models. *SPE paper 62927,* 2000
- **A. TAM ; D. AIT-ALI-YAHIA ; M. ROBICHAUD ; M. MOORE ; V. KOZEL ; W. HABASHI.** Anisotropic mesh adaptation for 3D flows on structured and unstructured grids. *Computer Methods in Applied Mechanics and Engineering,* 2001, 1205-1230
- **R. VERFURTH.** A review of a posteriori error estimation and adaptive mesh-refinement techniques. Wiley, 1996